# EUROPEAN PATENT APPLICATION

(11) **EP 3 816 201 A1**
(43) Date of publication of application: **05.05.2021**
(21) Application number: 19825684.4
(22) Date of filing: 27.06.2019
(51) Int. Cl.: C08G 18/38, C08G 75/045, G02B 1/04

(54) **POLYMERIZABLE COMPOSITION FOR OPTICAL MEMBER, AND OPTICAL MEMBER**

(30) Priority: 29.06.2018 JP 2018125590
(71) Applicant: Hoya Lens Thailand Ltd., Pathumthani 12130 (TH)
(72) Inventor: IGARI Masahito, Tokyo 160-8347 (JP); YAMASHITA Teruo, Tokyo 160-8347 (JP); WATANABE Tsuyoshi, Tokyo 160-8347 (JP)
(74) Representative: Beckmann, Claus
(86) International application number: PCT/JP2019/025550
(87) International publication number: WO 2020/004532

(57) **Abstract**

A polymerizable composition for an optical component, containing a polyiso(thio)cyanate compound, a polythiol compound, a first polymerization catalyst that catalyzes a thiol-ene reaction between the polyene compound and the polyiso(thio)cyanate compound, and a second polymerization catalyst that catalyzes a thiourethane reaction between the polyiso(thio)cyanate compound and the polythiol compound, wherein a content of the first polymerization catalyst is 0.10 parts by mass or less with respect to a total of 100 parts by mass of the polyene compound, the polyiso(thio)cyanate compound, and the polythiol compound.

## Description

### Technical Field

The present invention relates to a polymerizable composition for an optical component and an optical component.

### Background Art

A cured product obtained by curing a polymerizable composition containing a polyiso(thio)cyanate compound and a polythiol compound is widely used as various optical components such as lenses (refer to Patent Literature 1, for example).

### Citation List

### Patent Literature

Patent Literature 1: JP 7-252207 A

### Summary of Invention

### Technical Problem

Unintentional coloration of the optical component during production causes deterioration of the quality of the optical component. Therefore, it is desired that the optical component is less colored during producing.

According to one aspect of the present invention, there is provided an optical component obtained by curing a polymerizable composition containing a polyiso(thio)cyanate compound and a polythiol compound, which has less coloring generated during production.

### Solution to Problem

A cured product of a polymerizable composition containing a polyiso(thio)cyanate compound and a polythiol compound has a bond represented by the following Formula 1 in a molecule: 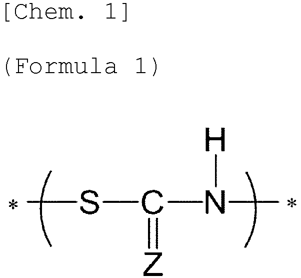 The "thiourethane bond" in the present invention and the present specification means a bond represented by the above Formula 1. In Formula 1, Z represents an oxygen atom or a sulfur atom. A reaction between the thiol group and the isocyanate group forms the bond in which Z is an oxygen atom. A reaction between the thiol group and the isothiocyanate group forms the bond in which Z is a sulfur atom. In the present invention and the present specification, these reactions are referred to as "thiourethane reaction". In Formula 1, * indicates the position where the thiourethane bond is bonded to another adjacent structure.

On the other hand, by further adding a compound having a polymerizable group capable of reacting with the thiol group of the polythiol compound to a polymerizable composition containing a polyiso(thio)cyanate compound and a polythiol compound, it is possible to obtain a cured product that contains the thiourethane bond and a bond formed by the reaction of such a polymerizable group and a thiol group. The present inventors have found that while considering using a polyene compound as a compound having such a polymerizable group, a cured product of a polymerizable composition containing a polyene compound, a polyiso(thio)cyanate compound, and a polythiol compound tends to become yellowish (yellowing) during production. As a result of repeated intensive studies, the present inventors have newly found that yellowing a cured product of a polymerizable composition containing a polyene compound, a polyiso(thio)cyanate compound, and a polythiol compound during the production can be reduced by reducing the content of a polymerization catalyst which catalyzes a thiol-ene reaction between the polyene compound and the polyiso(thio)cyanate compound in the above polymerizable composition.

That is, one aspect of the present invention relates to a polymerizable composition for an optical component (hereinafter, also referred to simply as "polymerizable composition") containing a polyene compound, a polyiso(thio)cyanate compound, a polythiol compound, a first polymerization catalyst that catalyzes a thiol-ene reaction between the polyene compound and the polyiso(thio)cyanate compound, and a second polymerization catalyst that catalyzes a thiourethane reaction between the polyiso(thio)cyanate compound and the polythiol compound, wherein a content of the first polymerization catalyst is 0.10 parts by mass or less with respect to a total of 100 parts by mass of the polyene compound, the polyiso(thio)cyanate compound, and the polythiol compound.

### Advantageous Effects of Invention

According to one aspect of the present invention, there is provided an optical component which is a cured product obtained by curing a polymerizable composition containing a polyene compound, a polyiso(thio)cyanate compound, and a polythiol compound, which has less coloring generated during production.

### Description of Embodiments

### [Polymerizable composition for optical component]

The polymerizable composition contains a polyene compound, a polyiso(thio)cyanate compound, and a polythiol compound.

In the present invention and the specification, the "polyene compound" is referred to as a compound having two or more carbon-carbon double bonds per molecule, and the "polythiol compound" is referred to as a compound having two or more thiol groups per molecule. The cured product of the polymerizable composition containing a polyene compound and a polythiol compound can have a carbon-carbon double bond of the polyene compound and a bond formed by a reaction (hereinafter, described as "thiol-ene reaction") with a thiol group of the polythiol compound.

In the present invention and the present specification, the "polyiso(thio)cyanate compound" refers to a compound having two or more iso(thio)cyanate groups per molecule. "Iso(thio)cyanate" means isocyanate and/or isothiocyanate. The isocyanate is sometimes referred to as isocyanate, and isothiocyanate is sometimes referred to as isothiocyanate. The cured product of a polymerizable composition containing a polyiso(thio)cyanate compound and a polythiol compound can have a thiourethane bond formed by a reaction (thiourethane reaction) between an iso(thio)cyanate group of the polyiso(thio)cyanate compound and a thiol group of the polythiol compound.

### (Polyene compound)

The number of carbon-carbon double bonds contained in the polyene compound is two or more per molecule, preferably three or more, and can be, for example, three to five. The polyene compound can contain a carbon-carbon double bond in a carbon-carbon double bond-containing group such as a (meth)acrylic group, a vinyl group, and an allyl group. The carbon-carbon double bond-containing groups contained in the polyene compound may be the same as or different from each other.

Specific examples of the polyene compound include vinyl compounds such as divinylbenzene and divinyltoluene, (meth)acrylates such as ethylene glycol di(meth)acrylate, diethylene glycol di(meth)acrylate, triethylene glycol di(meth)acrylate, trimethylolpropane tri(meth)acrylate, trimethylolpropane di(meth)acrylate, pentaerythritol tri(meth)acrylate, pentaerythritol tetra(meth)acrylate, tetraethylene glycol di(meth)acrylate, isocyanuric acid ethylene oxide modified tri(meth)acrylate, and allyl compounds such as diallyl phthalate, diallyl maleate, triallyl cyanurate, triallyl isocyanurate, triallyl trimellitate, and tetraallyloxyethane. As the polyene compound, the polyene compound may be used singly or in combination of two or more kinds thereof.

The polyene compound can be, for example, an aliphatic compound, an alicyclic compound, an aromatic compound, a heterocyclic compound, or the like. In one aspect, the polyene compound can be a cyclic structure-containing compound. The cyclic structure-containing compound may be a carbocyclic compound, a heterocyclic compound, a monocyclic compound, or a bicyclic or higher polycyclic compound. Moreover, the polyene compound may include a plurality of cyclic structures. In one aspect, the polyene compound can be a heteroalicyclic compound or a heteroaromatic compound, and specifically, an isocyanuric ring-containing compound or a cyanuric ring-containing compound.

The content of the polyene compound in the polymerizable composition can be, for example, more than 0% by mass and 50.00% by mass or less, and preferably 10.00% to 35.00% by mass with respect to the mass (100% by mass) of the polymerizable composition. In the present invention and the present specification, the mass of the polymerizable composition means the mass excluding the solvent when the polymerizable composition contains the solvent.

### (Polyiso(thio)cyanate compound)

The polyiso(thio)cyanate compound can be, for example, an aliphatic compound, an alicyclic compound, an aromatic compound, a heterocyclic compound, or the like. The number of iso(thio)cyanate groups contained in the polyiso(thio)cyanate compound is two or more, preferably two to four, and more preferably two or three per one molecule.

The polyiso(thio)cyanate compound can be, for example, an aliphatic compound, an alicyclic compound, an aromatic compound, a heterocyclic compound, or the like. Specific examples of the polyiso(thio)cyanate compound include: an aliphatic polyisocyanate compound such as hexamethylene diisocyanate, 1,5-pentane diisocyanate, isophorone diisocyanate, bis(isocyanatomethyl) cyclohexane, dicyclohexylmethane diisocyanate, 2,5-bis(isocyanatomethyl)-bicyclo [2.2.1]heptane, 2,6-bis(isocyanatomethyl)-bicyclo [2.2.1]heptane, bis(4-isocyanatocyclohexyl) methane, 1,3-bis(isocyanatomethyl) cyclohexane, or 1,4-bis(isocyanatomethyl) cyclohexane; and an aromatic polyisocyanate compound such as xylylene diisocyanate, 1,3-diisocyanatobenzene, tolylene diisocyanate, or diphenylmethane diisocyanate. Furthermore, a halogen substitution product of the polyiso(thio)cyanate compound such as a chlorine substitution product thereof or a bromine substitution product thereof, an alkyl substitution product thereof, an alkoxy substitution product thereof, a prepolymer type modified product thereof with a nitro substitution product or a polyhydric alcohol, a carbodiimide modified product thereof, a urea modified product thereof, a biuret modified product thereof, a dimerization or trimerization reaction product thereof, and the like can be used. As the polyiso(thio)cyanate compound, only one kind of polyiso(thio)cyanate compound may be used, or two or more kinds of polyiso(thio)cyanate compounds may be mixed to be used. In one aspect, the polymerizable composition can contain a cyclic structure-containing compound as a polyiso(thio)cyanate compound. The cyclic structure-containing compound may be a carbocyclic compound, a heterocyclic compound, a monocyclic compound, or a bicyclic or higher polycyclic compound. Moreover, the polyiso(thio)cyanate compound may include a plurality of cyclic structures. In one aspect, the polyiso(thio)cyanate compound can be an aromatic compound (aromatic polyiso(thio)cyanate compound).

The content of the polyiso(thio)cyanate compound in the polymerizable composition can be, for example, more than 0% by mass and 50.00% by mass or less, and preferably in a range of 10.00% to 35.00% by mass with respect to the mass (100% by mass) of the polymerizable composition.

### (Polythiol compound)

The polythiol compound can be, for example, an aliphatic compound, an alicyclic compound, an aromatic compound, a heterocyclic compound, or the like. The number of thiol groups contained in the polythiol compound is two or more, and preferably two to four per molecule. In addition, the number of thiol groups contained in the polythiol compound is preferably three or more per molecule.

Examples of the polythiol compound include aliphatic polythiol compounds such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis (2-mercaptoacetate), pentaerythritol tetrakis (3-mercaptopropionate), and 1,2-bis(2-mercaptoethylthio)-3-mercaptopropane; aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracene dimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane; halogen-substituted aromatic polythiol compounds such as a chlorine substitution product and a bromine substitution product such as 2,5-dichlorobenzene-1,3-dithiol, 1,3-di(p-chlorophenyl)propane-2,2-dithiol, 3,4,5-tribromo-1,2-dimercaptobenzene, and 2,3,4,6-tetrachloro-1,5-bis(mercaptomethyl)benzene; aromatic polythiol compounds containing a sulfur atom in addition to a thiol group (also referred to as "mercapto group") such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, 1,2,4,5-tetrakis(mercaptoethylthio)benzene, and nuclear alkylated product thereof; aliphatic polythiol compounds containing a sulfur atom in addition to a thiol group such as bis(mercaptomethyl)sulfide, bis(mercaptoethyl)sulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio)propane,
tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercapto-1,4-dithiane, bis(mercaptomethyl)disulfide, bis(mercaptoethyl)disulfide, bis(mercaptopropyl)disulfide, and esters of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl ulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-3,6-dithiaoctane-1,8-dithiol, bis(1,3-dimercapto-2-propyl) sulfide, bis(mercaptomethyl)-3,6,9-trithiaundecane-1,11-dithiol (also known as "bis(mercaptomethyl)-3,6,9-trithia-1,11-undecandithiol";one of the isomers selected from the group consisting of 4,7-bis(mercaptomethyl)-3,6,9-trithiaundecane-1,11-dithiol, 4,8-bis(mercaptomethyl)-3,6,9-trithial undecane-1,11-dithiol, and 5,7-bis(mercaptomethyl)-3,6,9-trithial undecane-1,11-dithiol, or a mixture of two or three of these isomers); and heterocyclic compounds containing a sulfur atom in addition to a thiol group such as 3,4-thiophenedithiol, tetrahydrothiophene-2,5-dimercaptomethyl, 2,5-dimercapto-1,3,4-thiadiazole, 2,5-dimercapto-1,4-dithiane, and 2,5-dimercaptomethyl-1,4-dithiane.

In one aspect, the polythiol compound contained in the polymerizable composition can be an aliphatic compound. Further, in one aspect, the polythiol compound can be an ester bond-containing compound. The polythiol compound containing an ester bond can contain, for example, two or more ester bonds per molecule, for example, 2 to 5 ester bonds. In one aspect, the polythiol compound can be an ester bond-containing aliphatic compound.

The content of the polythiol compound in the polymerizable composition can be, for example, 20.00% to 80.00% by mass, and preferably 30.00% to 70.00% by mass, with respect to the mass (100% by mass) of the polymerizable composition.

### (Polymerization catalyst)

Further, the polymerizable composition includes, as a polymerization catalyst, a first polymerization catalyst that catalyzes a thiol-ene reaction between a polyene compound and a thiol compound, and a second polymerization catalyst which catalyzes a thiourethane reaction between a polyiso(thio)cyanate compound and a polythiol compound. As the first polymerization catalyst which catalyzes the thiol-ene reaction and the second polymerization catalyst which catalyzes the thiourethane reaction, known polymerization catalysts can be used.

Examples of the first polymerization catalyst for catalyzing thiol-ene reaction inlcude azobis compounds such as 2,2'-azobisisobutyronitrile, 2,2'-azobis(2-methylbutyronitrile), 2,2'-azobis-2,4-dimethylvaleronitrile, dimethyl-2,2'-azobisisoobtylate, 1,1'-azobis(cyclohexane-1-carbonitrile), 1,1'-azobis(1-acetoxyl-phenylethane), and 2,2'-azobis(4-methoxy-2,4-dimethylvaleronitrile); and peroxide compounds such as benzoyl peroxide, acetyl peroxide, tert-butyl peroxide, propionyl peroxide, lauroyl peroxide, peracetic acid tert-butyl, tert-butyl perbenzoate, tert-butyl hydroperoxide, tert-butyl peroxypivalate, 1,1-bis(t-butylperoxy)-3,3,5-trimethylcyclohexane, t-butylperoxide oxy-2-ethylhexanoate, t-amylperoxy-2-ethylhexanoate, t-amylperisononanoate, t-amylperoxyacetate, and t-amylperoxybenzoate. The content of the first polymerization catalyst in the polymerizable composition is 0.10 parts by mass or less with respect to the total mass (100 parts by mass) of the polyene compound, the polyiso(thio)cyanate compound, and the polythiol compound contained in the polymerizable composition. This can contribute to suppressing yellowing of the cured product obtained by curing the polymerizable composition during production. The yellowing during the production may occur, for example, in a step of polymerizing the polymerizable composition, but the polymerizable composition can suppress the yellowing.

The content of the first polymerization catalyst is preferably 0.08 parts by mass or less, more preferably 0.06 parts by mass or less, and further preferably 0.04 parts by mass or less. Further, the content rate of the above-mentioned first polymerization catalyst can be, for example, 0.005 parts by mass or more or 0.01 parts by mass or more.

Examples of the second polymerization catalyst that catalyzes the thiourethane reaction include organotin compounds such as dibutyltin diacetate, dibutyltin dilaurate, dibutyltin dichloride, dimethyltin dichloride, monomethyltin trichloride, trimethyltin chloride, tributyltin chloride, tributyltin fluoride, and dimethyltin dibromide. The polymerizable composition, for example, the second polymerization catalyst is 0.01 parts by mass to 0.5 parts by mass with respect to the total mass (100 parts by mass) of the polyene compound, the polyiso(thio)cyanate compound, and the polythiol compound contained in the polymerizable composition.

### (Other components)

The polymerizable composition can optionally contain one or more known components such as additives and polymerization catalysts that are generally used for producing an optical component. Examples of the additives include various additives such as an ultraviolet absorber, an antioxidant, and a release agent. Further, an organic phosphorus compound such as a phosphine derivative can also be used as an additive. The amount of the additive used can be set appropriately.

The above-mentioned polymerizable composition can be prepared by simultaneously or sequentially mixing the above-described various components at the same time or in any order. The preparation method is not particularly limited, and any known method for preparing a polymerizable composition can be adopted. Further, the polymerizable composition may be prepared without adding a solvent, or may be prepared by adding an optional amount of the solvent. As the solvent, it is possible to use one or more of known solvents that can be used in the polymerizable composition.

### <Method for manufacturing cured product>

The polyene compound, the polyiso(thio)cyanate compound, and the polythiol compound described above are all polymerizable compounds, and by polymerizing these compounds, the polymerizable composition can be cured to obtain a cured product. The cured product thus obtained can be used as various optical components.

For example, examples of the optical component include various lenses such as a spectacle lens, a telescope lens, a binocular lens, a microscope lens, an endoscope lens, and an imaging system lens of various cameras. The "lens" in the present invention and the present specification includes a "lens substrate" in which one or more layers are optionally layered.

For example, cast polymerization is preferable for producing a cured product (also referred to as "plastic lens") having a lens shape. In cast polymerization, a polymerizable composition is injected into a cavity of a molding die having two molds facing each other with a predetermined gap and a cavity formed by closing the gap, and the polymerizable compound contained in the polymerizable composition is polymerized (curing reaction) in the cavity to obtain a cured product. For details of a molding die usable for cast polymerization, for example, refer to paragraphs 0012 to 0014 and Fig. 1 of JP 2009-262480 A. Note that the publication describes a molding die in which the gap between the two molds is closed with a gasket as a sealing member, but a tape can also be used as the sealing member.

In an aspect, cast polymerization can be performed as follows. The polymerizable composition is injected into a molding die cavity from an injection port formed on a side surface of the molding die. After the injection, by polymerizing (curing reaction) the polymerizable compound contained in the polymerizable composition preferably by heating, the polymerizable composition is cured to obtain a cured product having an internal shape of the cavity transferred thereon. A polymerization condition is not particularly limited, and can be appropriately set depending on the composition of a polymerizable composition or the like. As an example, a molding die having a polymerizable composition injected into a cavity can be heated at a heating temperature of 20°C to 150°C for about 1 to 72 hours, but the polymerization condition is not limited thereto. In the present invention and the present specification, the temperature such as a heating temperature for cast polymerization refers to a temperature of an atmosphere in which a molding die is placed. In addition, it is possible to raise the temperature at an arbitrary temperature rising rate during heating, and to lower the temperature (cooling) at an arbitrary temperature falling rate. After completion of the polymerization (curing reaction), the cured product inside the cavity is released from the molding die. The cured product can be released from the molding die by removing the upper and lower molds forming the cavity and a gasket or a tape in an arbitrary order as usually performed in cast polymerization. The cured product released from the molding die can be used as an optical component after posttreatment as necessary, and can be used as, for example, various lenses (for example, lens substrate). As an example, the cured product used as a lens substrate of a spectacle lens can be usually subjected to a post-step such as annealing, a dyeing treatment, a grinding step such as a rounding step, a polishing step, or a step of forming a coat layer such as a primer coat layer for improving impact resistance or a hard coat layer for improving surface hardness after releasing. Furthermore, various functional layers such as an antireflection layer and a water-repellent layer can be formed on the lens substrate. A known technique can be applied to any of these steps. In this way, a spectacle lens of which a lens substrate is the cured product can be obtained. Furthermore, by mounting this spectacle lens in a frame, eyeglasses can be obtained.

### [Optical component]

One aspect of the present invention relates to an optical component that is a cured product obtained by curing the above polymerizable composition. The above description can be referred to for details of the method for producing the polymerizable composition and the cured product.

### Examples

Hereinafter, the present invention will be described in more detail with Examples, but the present invention is not limited to aspects indicated by Examples. Operation and evaluation described below were performed in air at room temperature (about 20°C to 25°C) unless otherwise specified. In addition, % and parts described below are on a mass basis unless otherwise specified.

### [Example 1]

22.0 g of 2,4-tolylene diisocyanate (TDI) as a polyiso(thio)cyanate compound, 22.0 g of triallyl isocyanurate (TAIC) as a polyene compound, and 0.30 g of triphenylphosphine (TPP) as an organic phosphorus compound, 0.15 g of butoxyethyl acid phosphate as a release agent (JP-506H, available from Johoku Chemical Co.,Ltd), 0.02 g of dimethyltin dichloride, and 0.05 g (0.05 parts with respect to a total mass of 100 parts of polyene compound, polyiso(thio)cyanate compound, and polythiol compound) of 2,2'-azobis-2,4-dimethylvaleronitrile as a polymerization catalyst were added to a 300 ml eggplant-shaped flask, and stirring was continued for one hour under nitrogen purge at 20°C. When these were completely dissolved, 56.0 g of pentaerythritol tetrakis (2-mercaptoacetate) (PETMA) was added as a polythiol compound, and the mixture was stirred under reduced pressure for 20 minutes at 0.13 kPa (1.0 Torr) to prepare a polymerizable composition which contains a polyene compound, a polyiso(thio)cyanate compound, and a polythiol compound.

This polymerizable composition was injected into the cavity of the molding die through a polytetrafluoroethylene membrane filter having a pore diameter of 1.0 µm, and cast polymerization was carried out for 24 hours at a temperature program from an initial temperature of 25°C to a final temperature of 120°C to produce a plastic lens having a center thickness of 2 mm.

The plastic lens thus produced was released from the molding die and then subjected to measurement for a YI value. The measured YI value was 1.07.

### [Example 2]

A plastic lens was produced in the same manner as in Example 1 except that the additional amount of 2,2'-azobis-2,4-dimethylvaleronitrile was set to 0.02g (0.02 parts with respect to 100 parts by mass of the polyene compound, the polyiso(thio)cyanate compound, and the polythiol compound). The produced plastic lens was released from the molding die and then subjected to a measurement for YI value. The measured YI value was 0.87.

### [Comparative Example 1]

A plastic lens was produced in the same manner as in Example 1 except that the additional amount of 2,2'-azobis-2,4-dimethylvaleronitrile was set to 0.20 g (0.20 parts with respect to 100 parts by mass of the polyene compound, the polyiso(thio)cyanate compound, and the polythiol compound). The produced plastic lens was released from the molding die and then subjected to a measurement for YI value. The measured YI value was 2.22.

### [Example 3]

24.0 g of 2,4-tolylene diisocyanate (TDI) as a polyiso(thio)cyanate compound, 24.0 g of triallyl isocyanurate (TAIC) as a polyene compound, and 0.30 g of triphenylphosphine (TPP) as an organic phosphorus compound, 0.15 g of butoxyethyl acid phosphate as a release agent (JP-506H, available from Johoku Chemical Co.,Ltd), 0.01 g of dimethyltin dichloride, and 0.08 g (0.08 parts with respect to a total mass of 100 parts of polyene compound, polyiso(thio)cyanate compound, and polythiol compound) of 2,2'-azobis-2,4-dimethylvaleronitrile as a polymerization catalyst were added to a 300 ml eggplant-shaped flask, and stirring was continued for one hour under nitrogen purge at 20°C. When these were completely dissolved, 52.0 g of bis(mercaptomethyl)-3,6,9-trithiaundecane-1,11-dithiol as a polythiol compound was added, and the mixture was stirred under reduced pressure for 20 minutes at 0.13 kPa (1.0 Torr) to prepare a polymerizable composition which contains a polyene compound, a polyiso(thio)cyanate compound, and a polythiol compound.

This polymerizable composition was injected into the cavity of the molding die through a polytetrafluoroethylene membrane filter having a pore diameter of 1.0 µm, and cast polymerization was carried out for 24 hours at a temperature program from an initial temperature of 25°C to a final temperature of 125°C to produce a plastic lens having a center thickness of 2 mm.

The plastic lens thus produced was released from the molding die and then subjected to measurement for a YI value. The measured YI value was 1.19.

### [Comparative Example 2]

A plastic lens was produced in the same manner as in Example 3 except that the additional amount of 2,2'-azobis-2,4-dimethylvaleronitrile was set to 0.15 g (0.15 parts with respect to 100 parts by mass of the polyene compound, the polyiso(thio)cyanate compound, and the polythiol compound). The produced plastic lens was released from the molding die and then subjected to a measurement for YI value. The measured YI value was 2.36.

The above YI value (Yellowness Index) was measured according to JIS K 7373:2006 using a Hitachi spectrophotometer U-4100 as a measuring device. It can be said that the smaller the YI value, the less the yellowing. In one aspect, the YI value of 1.70 or less is preferable as a spectacle lens. The YI value can be, for example, 0.50 or more, but the lower the value, the better. Therefore, the YI value may be less than 0.50.

Finally, the above-described aspects will be summarized.

According to one aspect, there is provided a polymerizable composition for an optical component containing a polyene compound, a polyiso(thio)cyanate compound, a polythiol compound, a first polymerization catalyst that catalyzes a thiol-ene reaction between the polyene compound and the polyiso(thio)cyanate compound, and a second polymerization catalyst that catalyzes a thiourethane reaction between the polyiso(thio)cyanate compound and the polythiol compound, wherein a content of the first polymerization catalyst is 0.10 parts by mass or less with respect to a total of 100 parts by mass of the polyene compound, the polyiso(thio)cyanate compound, and the polythiol compound.

According to the above-mentioned polymerizable composition, it is possible to provide an optical component which is a cured product, which has less coloring generated during production.

In one aspect, the first polymerization catalyst may be an azobis compound.

In one aspect, the second polymerization catalyst may be an organotin compound.

In one aspect, the polyene compound can be an allyl compound.

In one aspect, the polyene compound can be a compound containing three or more carbon-carbon double bonds per molecule.

In one aspect, the polythiol compound can be a compound containing three or more thiol groups per molecule.

In one aspect, the polyiso(thio)cyanate compound can be a compound containing two or more iso(thio)cyanate groups per molecule.

In one aspect, the optical component can be a lens.

In one aspect, the lens can be a spectacle lens.

According to one aspect, there is provided an optical component that is a cured product obtained by curing the above polymerizable composition for an optical component.

The optical component can be an optical component that has less coloring.

The various aspects described in this specification can be combined in two or more in any combination.

The embodiment disclosed here is exemplary in all respects, and it should be considered that the embodiment is not restrictive. The scope of the present invention is defined not by the above description but by claims, and intends to include all modifications within meaning and a scope equal to claims.

### Industrial Applicability

An aspect of the present invention is useful in the field of producing various kinds of optical components such as a spectacle lens.

## Claims

1. A polymerizable composition for an optical component, comprising:
a polyene compound, a polyiso(thio)cyanate compound;
a polythiol compound;
a first polymerization catalyst that catalyzes a thiol-ene reaction between the polyene compound and the polyiso(thio)cyanate compound; and
a second polymerization catalyst that catalyzes a thiourethane reaction between the polyiso(thio)cyanate compound and the polythiol compound,
wherein a content of the first polymerization catalyst is 0.10 parts by mass or less with respect to a total of 100 parts by mass of the polyene compound, the polyiso(thio)cyanate compound, and the polythiol compound.

2. The polymerizable composition for an optical component according to claim 1,
wherein the first polymerization catalyst is an azobis compound.

3. The polymerizable composition for an optical component according to claim 1 or 2,
wherein the second polymerization catalyst is an organotin compound.

4. The polymerizable composition for an optical component according to any one of claims 1 to 3,
wherein the polyene compound is an allyl compound.

5. The polymerizable composition for an optical component according to any one of claims 1 to 4,
wherein the polyene compound is a compound containing three or more carbon-carbon double bonds per molecule.

6. The polymerizable composition for an optical component according to any one of claims 1 to 5,
wherein the polythiol compound is a compound containing three or more thiol groups per molecule.

7. The polymerizable composition for an optical component according to any one of claims 1 to 6,
wherein the polyiso(thio)cyanate compound is a compound containing two or more iso(thio)cyanate groups per molecule.

8. The polymerizable composition for an optical component according to any one of claims 1 to 7,
wherein the optical component is a lens.

9. The polymerizable composition for an optical component according to claim 8,
wherein the lens is a spectacle lens.

10. An optical component which is a cured product obtained by curing the polymerizable composition for an optical component according to any one of claims 1 to 9.
